# EUROPEAN PATENT APPLICATION

(11) **EP 4 538 552 A1**
(43) Date of publication of application: **16.04.2025**
(21) Application number: 23202526.2
(22) Date of filing: 09.10.2023
(51) Int. Cl.: F16D 1/108, F16D 1/10

(54) **COUPLING ARRANGEMENT**

(71) Applicant: RUAG AG, 6032 Emmen (CH)
(72) Inventor: Rüd, Mario, 8903 Birmensdorf (CH)
(74) Representative: AMMANN PATENTANWÄLTE AG

(57) **Abstract**

In a coupling arrangement of the hub-shaft type, at least one of hub (9) and shaft (3) comprises two sections (33; 37), these two sections being connected by an intermediate flexible section (35; 75). The flexibility of the intermediate section is attained by circumferentially provided helical slots. The flexible intermediate section serves the purpose to twist the twistable section relative to the fixed section if a nut (23) is screwed on the terminal thread (7) with increasing torque. Thereby, any play existing in the coupling, i.e. between the flutes of hub and shaft, is removed. By further increasing the torque, the coupling is even backlash-free in both rotational directions up to at least the torque excess.

## Description

The present invention relates to a coupling arrangement according to the preamble of claim1.

A well-known mechanical connection or coupling is attaching a hub of a wheel, a propeller, or the like to a shaft, with the shaft being preferably rotatable and the connection not allowing a rotation of the shaft with respect to the hub. Generally, the hub comprises a sleeve-like portion with its inner surface closely adapted to the outer surface of the shaft. The inner and the outer surface are shaped in a section orthogonal to the axial direction, i. e. the axis of rotation of the shaft, in a manner deviating from circular so that a relative rotational movement is inhibited.

Often, the shaft is fluted (provided with axial ribs) and the hub is designed complementarily thereto, so that a positive engagement is obtained which, though, allows an axial relative movement. E. g., the axial movement is advantageous for mounting the hub on the shaft.

Yet, this type of rotational coupling is prone to a back-lash due to unavoidable tolerances. US4473317 teaches to have the fluted part partitioned in two axially consecutively arranged segments, with the interface between the segments being provided with substantially complementarily inclined axially extending contact faces. In pressing the segment axially together, the contact faces tend to slide on each other so that a force is generated which tend to rotate the two segments relatively to each other. Consequently, the backlash is suppressed. A disadvantage is that the shaft is disintegrated in two pieces and the presence of inclined surfaces sliding on each other.

According to DE102017129620, the rotational force is created by a hydraulic cylinder arranged in the interior of the shaft instead of inclined contact faces. The shaft of the cylinder has a helically shaped transverse oblong hole through which a rod extends, so that the rod rotates when moved in the hole. The ends of the rod are attached to the surrounding shaft. When the cylinder is activated, a rotational force on the shaft is generated by the movement of the rod in the helical hole. Obviously, providing a hydraulic cylinder requires presence of a hydraulic system and is mechanically quite complex.

Therefore, it is an object of the present invention to provide an improved hub-shaft coupling which allows a backlash-free coupling providing control on backlash-suppressing force and provides reduced complexity.

Such a coupling arrangement is defined in claim 1. The other claims present preferred embodiments.

Other advantages longed for are:
- Improved entering;
- Better balancing obtainable;
- Better balancing repeatability;
- Reduced to no hysteresis, in particular when used with a measurement device;
- No abrupt stress with cyclic loads; or
- No movement with respect to a locking nut due to back-lash: Such movement tends to loosen the nut.

The most preferred embodiment yields all these additional advantages, whereas in conceivable variations, the majority, some, one or in the extreme none thereof is present.

Preferred applications of such a back-lash free coupling (or zero-backlash coupling) are in a steering column or a drive shaft.

Accordingly, the hub-shaft coupling assembly according to the invention comprises a shaft and a hub which can be axially slidably assembled and are interlocked by the axially fluted exterior surface of the shaft and the corresponding interior fluted surface of the hub.

As countermeasure against backlash, either the hub or the shaft comprises an axially intermediate section which is arranged between a front and a rear fluted section and is capable to convert axial compression force into a relative rotational force. In other terms, the front and back end of the intermediate section tend to rotate relatively to each other if a compression force is exerted on the intermediate section.

Preferably, this capability of the intermediate section is realized by providing inclined (helical) slits so that the intermediate section is substantially constituted by circumferentially distributed inclined or helical bars. If an axial force is exerted on the bars, a rotational force is generated which tends to twist the intermediate section.

When the intermediate section is twisted, a rotational force is exerted on the adjacent front and back sections rotating them relatively to each other until a play or backlash is reduced to zero. Further increase of the rotational force increases the resistance against recreation of a backlash if torque is applied to the shaft-hub interconnection. In other terms, the backlash-free hub-shaft connection provides a resilient resistance against occurrence of backlash depending on the properties of the intermediate section and the axial force applied.

The invention will be further explained by way of preferred embodiments with reference to the Figures:
- Fig. 1: Exploded view of a first embodiment with slotted hub;
- Fig. 2: Side view of the 1st embodiment;
- Fig. 3: Axial section of the 1st embodiment according to B-B in Fig. 2;
- Fig. 4: Cross section according to A-A in Fig. 2;
- Fig. 5: Greatly enlarged detail according to C in Fig. 4;
- Fig. 6: Force diagram of the backlash-free connection;
- Fig. 7: Exploded view of a 2nd embodiment with slotted shaft;
- Fig. 8: Side view of the 2nd embodiment, assembled; and
- Fig. 9: Axial section according to D-D in Fig. 8.

The backlash-free (play-free) connection 1 comprises a shaft 3 with an axially fluted section 5 and a terminal threaded section 7.

The hub 9 comprises the collar 11 which represents a rim, wheel, fan or other part to be rotated (or held) by the shaft 3, and the sleeve 13 designed to be axially shifted on the fluted section 5. The axial external elevations 15 and depressions 17 of the fluted section 5 and the internal elevations 19 and depressions 21 of the sleeve 13 are complementarily shaped. Generally, however, a small play is required so that the sleeve can be easily pushed on the fluted section 5. Generally, such a play is also almost always not avoidable due to tolerances.

The sleeve 13 comprises a front section 33, an intermediate section 35 and a rear section 37. The intermediate section 35 is characterized by slanted slots 39 separated by bars 41. Preferably, the bars 41 are of rectangular cross-section. For example, the slots are cut out of the massive material by a kind of beam (laser beam, pressurized liquid beam) or another tool directed in parallel to the radius through the middle of each bar. However, it is as well conceivable that the slots are cut by a tool of width of a slot, so that the cross-section of the bars 41 is tapering toward the center. Of course, as the thickness of the sleeve is mostly small with respect to the diameter of the fluted part, the conicity is small, and the cross-section may be considered about rectangular.

The interior surface of the intermediate section 35 is preferable free of elevations and depressions.

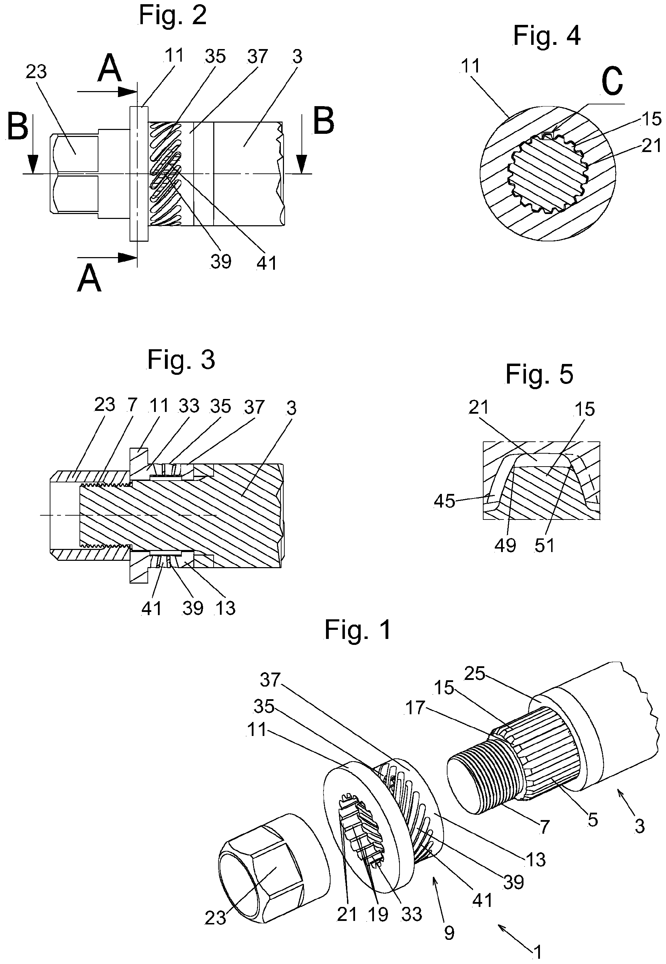

A nut 23 mounted on the threaded section 7 in order to hold sleeve 13 on shaft 3. In tightening nut 23 beyond the point where nut 23, hub 13, and shaft 3 are in contact without play, an axial compressive force can be applied to hub 13, i. e. hub 13 is further squeezed between nut 23 and stop face 25 of shaft 23. This force, exerted on the slotted section, creates a twist force due to the slanted bars 41 between front section 33 and rear section 37. As is illustrated in Fig. 5, a minute gap 45 exists between depression 21 of the sleeve 13 (front section 33 as well as rear section 37) and elevation 15 of the fluted section 5 of shaft 3, and vice versa between elevation 19 and depression 17. Due to the twisting, front section 33 and rear section 37 are rotated with respect to each other so that opposite flanks 49, 51 of elevations 19 of front section 33 and rear section 37 are pressed against opposite flanks of depressions 17 of the sleeve13, cf. the solid lines in Fig. 5 indicating the situation of the front section 33 and the broken line together with corresponding right shifted solid relating to the situation of the rear section 37.

Obviously, the play or backlash is suppressed thereby. However, due to the elasticity of the bars 41, a sufficiently high torque exceeding the twisting force generated within the sleeve 13 and directed against the twist force will allow a small movement of the shaft with respect to the hub of the size of gap 45.

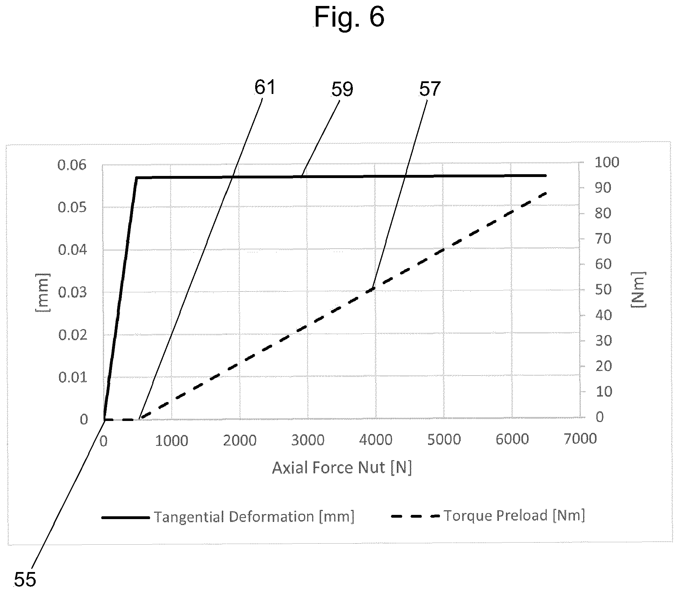

Fig. 6 illustrates the events during tightening the nut 23. The origin 55 represents the situation where all parts of the connection are just in contact. As shown by the broken line 57, further tightening the nut increases almost insensible the axial tension, as the sleeve can be axially compressed with low force exerted by twisting (solid line 59) in itself until the gap 45 is used off. This situation is attained at edge 61. Further tightening increases correspondingly the axial force on the hub 9 and increases the resistance against rotation of shaft 3 with respect to hub 9 contrary to the twist movement.

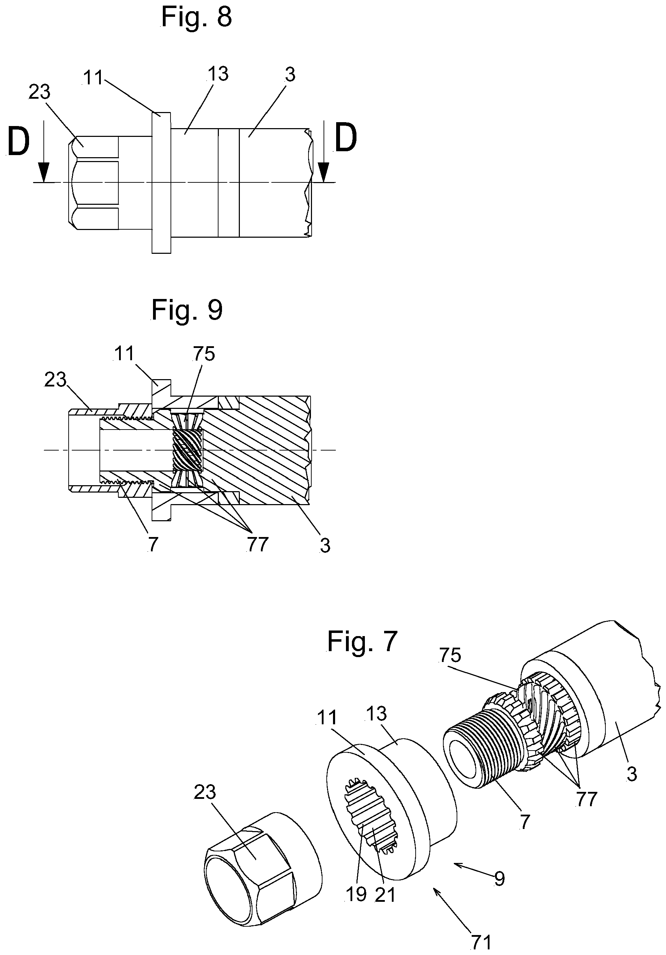

Figs. 7 to 9 show a second embodiment 71 (reference numerals reused as far as designating the same parts as in the 1st embodiment) wherein the slotted section 75 is an intermediate section of the fluted section 77 of the shaft 3, and the hub 9 is solid. Preferably, the shaft is, at least at the fluted section, a hollow shaft. In contrast to the first embodiment, in tightening the nut 23, a pull force is exerted on the helically slotted section 75 and the latter is in consequence lengthened, until the play between the elevations/depressions of the fluted part 77 of shaft 3 and the elevations/depressions 19, 21 of the hub 9 is used off by the ensuing twist of the front section of the fluted part 77 of shaft 3 against the rear part thereof. A torque applied contrary to the twist force tends to lengthen the bars of the slotted section in contrast to the 1st embodiment., where the bars may be bent or otherwise compressed in response to a strong torque. On the other hand, the bars are prone to be ripped off under excess stress if they are not capable to support the lengthening required to cope with the backlash of the coupling.

Further specifics are as follows:
- Material, at least of the part provided with helical slots: metal, more preferably steel. However, a polymeric material is conceivable.
- Tensile strength of at least the part provided with helical slots: at least 50 MPa (megapascal), for high loaded connections at least 500 MPa, preferably at least 1000 MPa.
- Material yield elongation (maximal elastic elongation; thereafter, plastic deformation occurs) of at least 0.4 %, more preferably at least 0.6%.
- Fraction of slots width to total circumference as an average value over the height of the bars (thickness of material of the intermediate section comprising the bars 41): Maximum 80 %, preferably 60 %, most preferably 30 %. A fraction above 80 % is not impossible, yet the part in the slotted section will be too heavily weakened. Accordingly, average circumferential fraction of bars is at least 20 %, preferably 40 %, most preferably 70 %
- The number of bars is at least 18, more preferably at least 24 , even more preferably at least 36.
- Cross-section of the bars is preferably rectangular. Such a cross-section requires that the process to create the slots allows cutting in parallel to the radius through the centers of the bars. Hence, preferred are processes using a beam, like laser-cutting, waterjet-cutting, in particular using a tool having a cutting width at most of the width of the slot between two bars where the width has it smallest value. However, if the diameter of the shaft is large with respect to the radial height of the bars (at least 5 times, preferably at least 10 times the radial height), cutting them with some other known tool, e.g. a cutter or miller is feasible as well in spite of the bars obtained having a frustoconical cross-section. Preferably, conicity (difference between exterior and interior linear width relative to height) is at most 15 %, more preferably at most 5 % and even more preferably at most 1 %.
- The bars are inclined with respect to the central axis (rotational symmetry axis of the coupling) by 30° to 80°, preferably by 40° to 60°.
- The axial flutes may be present also in the helically slotted section, or they may be absent in that section.
- Preferred diameter of the shaft is 5 mm to 200 mm (millimeter).
- The axial fraction of the sections not bearing slots is in 25 % to 75 %, more preferably about 50 %. The fraction is preferably equally distributed, i.e. the section not provided with slots has the same length. E.g. for two unslotted sections as in the preferred embodiment, each unslotted section constitutes most preferably about 25 % of the length of coupling section of the hub or of the shaft.
- The fluted section connected to the remainder of the hub or shaft by the flexible (slotted) section is configured to transmit up to 50 %, preferably up to 75 % of the maximum torque the fluted section of the remainder of the hub or shaft is configured to transmit.
- The nut tightening torque needed to just remove the play of the coupling with respect to the total tightening torque is at most 20 %, preferably at most 10 % and even more preferably at most 5 %. The total tightening torque may be considered the tightening torque the coupling is designed for. This designed tightening torque may be the maximal tightening torque.

The description set forth above allows the one skilled in the art to conceive variants and alternations without leaving the scope of protection which is defined by the claims, for example:
- More than one intermediate slotted section is provided, separated each time by a rigid section, i.e. a section which is a rear section for one intermediate section and a front section for the following intermediate section.
- Instead of or additionally to axially extending elevations/depressions, the circumference of the coupling section of the shaft (according to the described embodiments, the coupling section is the fluted section) may not be circular. With the interior surface of the hub shaped complementarily, a positive lock is attained. With the same means as described, the play between hub and shaft can be suppressed. Such non-circular circumferences may be triangular, quadrangular.
- The space between the bars may be at least one of filled by an elastomeric material and covered by a flexible or elastomeric material.

## Claims

1. Coupling arrangement (1; 71) comprising a shaft portion (3) and a sleeve portion (13), in particular a hub (9), the shaft portion having an outer circumferential shaft coupling surface (5; 77) and the sleeve having an inner sleeve coupling surface, the shaft coupling surface and the sleeve coupling portion being of a closely complementary and of significantly non-circular shape so that the sleeve portion can be arranged on the shaft portion without being rotatable with respect to each other, **characterized in that** at least one of the sleeve portion and the shaft portion comprises a front portion (33) and a rear portion (37) connected by a twist portion (35), the twist portion comprising a multitude of strip-shaped connectors (41) inclined with respect to an axial direction of the shaft portion, so that the twist portion exerts a rotational force on the rear portion with respect to the front portion when an axial force is applied in direction of the axial direction in order to reduce a rotational play between sleeve portion and shaft portion.

2. Coupling arrangement (1; 71) according to claim 1, **characterized in that** the shaft portion (3) comprises at least one of:
- at least one bar, preferably at least three, more preferably four, five, six, 9, 12, 15, or 18 ribs extending in an angle of 0° up to an angle smaller than 90° with respect to the axial direction, preferably in an angle of 0° up to maximally 60°, more preferably maximally 45°, even more maximally 30°, and most preferably extending substantially parallel to the axial direction;
- at least one axially extending edge, preferably a polygonal cross-section with straight or bent edges and three or more corners;
- a cross-section deviating from circular so that a rotation of shaft portion relative to sleeve portion (13) is inhibited, preferably an elliptic or oval cross-section,
so that a rotational movement of the shaft portion with respect to the sleeve portion is inhibited.

3. Coupling arrangement (1; 71) according to one of claims 1 to 2, **characterized in that** the at least one of shaft portion (3) and sleeve portion (13) substantially consists of one of a metal, an alloy, steel, and a polymeric material, or a composite material thereof.

4. Coupling arrangement (1; 71) according to one of claims 1 to 3, **characterized in that** it consists of a material of a tensile strength of at least 50 MPa (Megapascal), preferably at least 500 MPa, more preferably at least 1000 MPa.

5. Coupling arrangement according to one of claims 1 to 4, **characterized in that** it consists of a material having a material yield elongation of at least 0.4 %, preferably of at least 0.6 %.

6. Coupling arrangement (1; 71) according to one of claims 1 to 5, **characterized in that** the sum of average widths of the strip-shaped connectors is at least 80 % of the circumference of the twist section, and preferably in the range from at least 40 % to at most 70 %.

7. Coupling arrangement (1; 71) according to one of claims 1 to 6, **characterized in that** the inclination of the strip shaped connectors with respect to the axial direction is at least 30° up to at most 80°, preferably from at least 40° up to at most 60°, and most preferably about 45°.

8. Coupling arrangement (1; 71) according to one of claims 1 to 7, **characterized in that** the lengths of the front (33) and of the rear portion (37) constitute from about 25 % to about 75 % of the total length of front portion, twist portion (35), and rear portion.

9. Coupling arrangement (1; 71) according to one of claims 1 to 8, **characterized in that** the ratio of length of front portion (33) to length of rear portion (37) is at least 2:3 up to at most 3:2, preferably about 1:1.

10. Coupling arrangement (1; 71) according to one of claims 1 to 9, **characterized in that** it is configured so that the twist part is capable to transmit up to 50 % of a maximal designed torque the coupling arrangement is designed for, preferably at most 75 % of the designed torque.

11. Coupling arrangement (1; 71) according to one of claims 1 to 10, **characterized in that** at most 20 %, preferably at most 10 %, and more preferably at most 5 % of a designed nut tightening torque the coupling arrangement is designed for is required to reduce the play between shaft portion (3) and sleeve portion (13) to zero.

12. Coupling arrangement (1; 71) according to one of claims 1 to 11, **characterized in that** the twist section comprises at least 18, preferably at least 24, and more preferably at least 36 strip-shaped connectors.
